(19) Europäisches Patentamt
European Patent Office
Office européen des brevets

(11) EP 3 424 976 A1

(12) # EUROPEAN PATENT APPLICATION

(43) Date of publication:
**09.01.2019 Bulletin 2019/02**

(51) Int Cl.:
***C08G 63/00*** *(2006.01)*

(21) Application number: **17180301.8**

(22) Date of filing: **07.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Clariant International Ltd**
**4132 Muttenz (CH)**

(72) Inventors:
- **Mutch, Kevin**
**60385 Frankfurt (DE)**
- **Romanski, Steffen**
**46483 Wesel (DE)**
- **Schaefer, Carsten**
**60311 Frankfurt (DE)**
- **Diederichs, Jan**
**84508 Burgkirchen (DE)**
- **Batchelor, Stephen Norman**
**Merseyside CH63 3JW (GB)**
- **Breffa, Catherine**
**68161 Mannheim (DE)**

(74) Representative: **Paczkowski, Marcus**
**Clariant Produkte (Deutschland) GmbH**
**Patent & License Management Chemicals**
**Industriepark Höchst / G 860**
**65926 Frankfurt am Main (DE)**

(54) **ALKOXYLATED POLYCARBOXYLIC ACID ESTERS**

(57) Alkoxylated polycarboxylic acid esters are provided obtainable by first reacting an aromatic polycarboxylic acid containing at least three carboxylic acid units or anhydrides derived therefrom, preferably an aromatic polycarboxylic acid containing three or four carboxylic acid units or anhydrides derived therefrom, more preferably an aromatic polycarboxylic acid containing three carboxylic acid units or anhydrides derived therefrom, even more preferably trimellitic acid or trimellitic acid anhydride, most preferably trimellitic acid anhydride, with an alcohol alkoxylate and in a second step reacting the resulting product with an alcohol or a mixture of alcohols, preferably with an alcohol.



Printed by Jouve, 75001 PARIS (FR)

## Description

The present invention concerns the field of alkoxylated aromatic polycarboxylic acid esters and a method for their preparation. The alkoxylated aromatic polycarboxylic acid esters may advantageously be used as anti-redeposition agents in washing applications.

Anti-redeposition agents used in laundry detergents help to prevent soil from resettling on a fabric after it has been removed during washing. This can, for example, be achieved by dispersing the soil in the washing liquor.

The washing of soiled fabrics with a laundry detergent composition is essentially a two-step process. In the first stage the detergent must remove the soil from the fabric and suspend it in the washing liquor. In the second stage the detergent composition must prevent the soil and other insoluble materials from re-depositing on the cloth before the fabric is removed from the washing liquor or the rinse liquor. Polymers are known to aid both processes. For example, soil release polymers enhance soil removal from the fabric whilst anti-redeposition polymers prevent the removed soil from re-depositing on the fabric.

Examples of suitable anti-redeposition agents include fatty acid amides, fluorocarbon surfactants, complex phosphate esters, styrene maleic anhydride copolymers, and cellulosic derivatives such as hydroxyethyl cellulose, hydroxypropyl cellulose, and the like.

US 4,240,918 e.g. describes polymers having anti-soiling and anti-redeposition properties, for example hydrophilic polyurethanes, certain copolyesters and mixtures thereof.

However, many of the known anti-redeposition agents possess the disadvantage that their performance and whitening effect in washing or laundry applications are insufficient.

Therefore, the problem to be solved by the present invention is to provide new anti-redeposition agents that have favourable performance and lead to enhanced "whiteness" when used in washing or laundry applications.

Surprisingly it has been found that this problem can be solved by specific alkoxylated polycarboxylic acid esters obtainable by first reacting an aromatic polycarboxylic acid containing at least three carboxylic acid units or an anhydride derived therefrom, with an alcohol alkoxylate and in a second step reacting the resulting product with an alcohol or a mixture of alcohols, preferably with an alcohol.

Accordingly, the invention provides specific alkoxylated polycarboxylic acid esters obtainable by first reacting an aromatic polycarboxylic acid containing at least three carboxylic acid units or an anhydride derived therefrom, preferably an aromatic polycarboxylic acid containing three or four carboxylic acid units or an anhydride derived therefrom, more preferably an aromatic polycarboxylic acid containing three carboxylic acid units or an anhydride derived therefrom, even more preferably trimellitic acid or trimellitic acid anhydride, most preferably trimellitic acid anhydride, with an alcohol alkoxylate and in a second step reacting the resulting product with an alcohol or a mixture of alcohols, preferably with an alcohol.

The specific alkoxylated polycarboxylic acid esters of the invention exhibit favourable performance as anti-redeposition agents in washing or laundry applications. They further show favourable performance as dispersants and in washing or laundry applications they lead to enhanced "whiteness". Furthermore, the alkoxylated polycarboxylic acid esters of the invention exhibit favourable stability and furthermore exhibit favourable biodegradability.

Polycarboxylic acid component

The aromatic polycarboxylic acid containing at least three carboxylic acid units or an anhydride derived therefrom is preferably an aromatic polycarboxylic acid containing three or four carboxylic acid units or an anhydride derived therefrom, more preferably an aromatic polycarboxylic acid containing three carboxylic acid units or an anhydride derived therefrom, even more preferably trimellitic acid or trimellitic acid anhydride, most preferably trimellitic acid anhydride.

Examples of aromatic polycarboxylic acids containing at least three carboxylic acid units or anhydrides derived therefrom are trimellitic acid, trimellitic acid anhydride, pyromellitic acid, pyromellitic acid dianhydride, trimesic acid, mellitic acid and mellitic anhydride.

Trimellitic acid anhydride has the following structure:

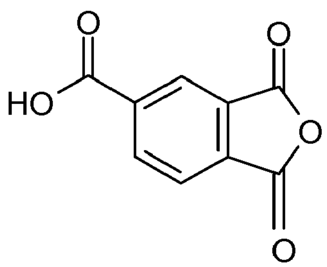

Alcohol alkoxylate component

In a preferred embodiment of the alkoxylated polycarboxylic acid esters of the invention, the alcohol alkoxylate is described by formula (I),

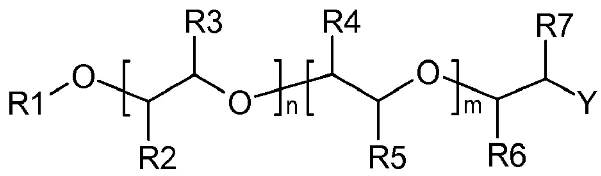

(I)

wherein R1 is a substituted or unsubstituted alkyl or alkenyl group having 1 to 20 carbon atoms, an aryl or alkyl aryl group having 6 to 20 carbon atoms, or H, preferably a substituted or unsubstituted alkyl or alkenyl group having 1 to 12 carbon atoms or an aryl or alkyl aryl group having 6 to 13 carbon atoms, more preferably a substituted or unsubstituted alkyl or alkenyl group having 1 to 6 carbon atoms, and most preferably a methyl group,

R2 to R5 are independently of each other hydrogen or an alkyl group having 1 to 4 carbon atoms, preferably hydrogen or methyl,

where the substituents R2 to R5 are chosen such that both of either R2 and R3 or R4 and R5 are hydrogen and at least one of the other substituents is different from hydrogen, preferably such that three of the substituents R2 to R5 are hydrogen, and even more preferably such that three of the substituents R2 to R5 are hydrogen and the other substituent is a methyl group,

n and m are independently of each other, based on a molar average, numbers of from 0 to 100 such that n+m is of from 4 to 100, preferably of from 8 to 70, more preferably of from 10 to 60 and even more preferably of from 12 to 50,

where in the case that R2 and R3 are both hydrogen, n is a number of from 4 to 100 and m is a number of from 0 to 50, preferably n is from 8 to 70 and m is from 0 to 30, more preferably n is from 10 to 60 and m is from 0 to 25 and even more preferably n is from 12 to 50 and m is from 0 to 20 and when m > 0, the ratio of n to m is larger than 1, preferably at least 2, more preferably at least 3 and even more preferably at least 4,

where in the case that R4 and R5 are both hydrogen, m is a number of from 4 to 100 and n is a number of from 0 to 50, preferably m is from 8 to 70 and n is from 0 to 30, more preferably m is from 10 to 60 and n is from 0 to 25 and even more preferably m is from 12 to 50 and n is from 0 to 20 and when n > 0, the ratio of m to n is larger than 1, preferably at least 2, more preferably at least 3 and even more preferably at least 4, and

where in the case that both n and m are > 0, the units are distributed blockwise, alternating, periodically and/or statistically,

R6 and R7 are independently of each other hydrogen or an alkyl group having 1 to 4 carbon atoms, preferably both R6 and R7 are hydrogen, and

Y is OH.

The value n+m is the molar average number of alkoxy groups. The values of n and m may be determined using NMR and the value of n+m is of from 4 to 100, preferably of from 8 to 70, more preferably of from 10 to 60 and even more preferably of from 12 to 50. Within this preferred embodiment, the value of n+m may be 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50.

In one preferred embodiment m is 0 and n is a number of from 4 to 100.

In another preferred embodiment both m and n are > 0.

In another preferred embodiment n is 0 and m is a number of from 4 to 100.

In a further preferred embodiment of the invention, R2 and R3 of formula (I) are both hydrogen, n is a number of from 4 to 100 and m is 0 or a number of from 1 to 50, preferably n is from 8 to 70 and m is 0 or from 1 to 30, more preferably n is from 10 to 60 and m is 0 or from 1 to 25 and even more preferably n is from 12 to 50 and m is 0 or from 1 to 20 and when m > 0, the ratio of n to m is larger than 1, preferably at least 2, more preferably at least 3 and even more preferably at least 4.

In a further preferred embodiment of the invention, R4 and R5 of formula (I) are both hydrogen, m is a number of from 4 to 100 and n is 0 or a number of from 1 to 50, preferably m is from 8 to 70 and n is 0 or from 1 to 30, more preferably m is from 10 to 60 and n is 0 or from 1 to 25 and even more preferably m is from 12 to 50 and n is 0 or from 1 to 20 and when n > 0, the ratio of m to n is larger than 1, preferably at least 2, more preferably at least 3 and even more preferably at least 4.

In a further preferred embodiment of the invention, three of R2, R3, R4 and R5 of formula (I) are hydrogen and the other is methyl and the values of both n and m are non-zero. The groups denoted by n and m are distributed blockwise, alternating, periodically and / or statistically.

In one preferred embodiment the substituted or unsubstituted alkyl or alkenyl residue R1 is unsubstituted, and is preferably methyl.

In a further preferred embodiment, the substituted alkyl or alkenyl residue R1 is substituted with one or more halogen atoms, a carbonyl group, a carboxyl group, an ester function or an ether function.

In a further preferred embodiment, the substituted or unsubstituted alkyl or alkenyl residue R1 has a linear or branched carbon chain, preferably a linear carbon chain.

In a further preferred embodiment of the invention, the alcohol alkoxylate is an ethoxylated alcohol or an ethoxylated and propoxylated alcohol, preferably of the formula (I), wherein the ratio of ethylene oxide units to propylene oxide units is larger than 1, preferably at least 2, more preferably at least 3 and even more preferably at least 4, and is preferably an ethoxylated and propoxylated alcohol.

In a further preferred embodiment of the invention, the alcohol alkoxylate of formula (I) is a polyethylene glycol monomethyl ether or an alcohol-terminated methyl-ethoxylated-propoxylated polyether with a molecular mass Mn of 252 to 4900, preferably with a molecular mass Mn of 350 to 4000, even more preferably with a molecular mass Mn of 450 to 3000 and particularly preferably with a molecular mass Mn of 500 to 2500 and is preferably a polyethylene glycol monomethyl ether with a molecular mass Mn of 252 to 4400, preferably with a molecular mass Mn of 350 to 4000, even more preferably with a molecular mass Mn of 450 to 3000 and particularly preferably with a molecular mass Mn of 500 to 2500.

The molecular mass Mn is the number-average molecular mass. The average molecular mass (Mn) of the alcohol alkoxylate may be determined by GPC (gel permeation chromatography) in analogy to the method disclosed in WO 2016/075178 A1 (pages 7/8), preferably as detailed in the following: 10 μl of sample is injected onto a PSS Suprema column of dimensions 300 x 8 mm with porosity 30 Å and particle size 10 μm. The detection is monitored at 235 nm on a multiple wavelength detector. The employed eluent is 1.25 g/l of disodium hydrogen phosphate in a 45/55 % (v/v) water/acetonitrile mixture. Separations are conducted at a flow-rate of 0.8 ml/min. Quantification is performed by externally calibrating standard samples of different molecular mass polyethylene glycols.

Alcohol component

In the alkoxylated polycarboxylic acid esters of the invention, the one alcohol or at least one alcohol from the mixture of alcohols used in step 2 of the reaction generally is an alkyl aryl alcohol having 7 to 13 carbon atoms or a substituted or unsubstituted alkyl or alkenyl alcohol having 2 to 20 carbon atoms, preferably an alkyl aryl alcohol having 7 to 10 carbon atoms, a substituted or unsubstituted alkyl or alkenyl alcohol having 12 to 18 carbon atoms or a substituted alkyl alcohol having 2 to 4 carbon atoms, more preferably an alkyl aryl alcohol having 7 to 10 carbon atoms, an unsubstituted alkyl or alkenyl alcohol having 12 to 18 carbon atoms, which is preferably straight chain, or an alkyl alcohol having 2 or 3 carbon atoms which is substituted with an ether function, most preferably an unsubstituted alkyl alcohol having 12 to 18 carbon atoms, or an alkyl alcohol with 2 carbon atoms which is substituted with a phenoxy or ethoxyphenoxy group, where the phenyl ring in said phenoxy groups may be further substituted.

In the case that the alcohol is an alkyl aryl substituent having 7 to 13 carbon atoms, the number of specified carbon atoms includes the aromatic ring.

In a preferred embodiment of the invention, the substituted alkyl or alkenyl alcohol is substituted with one or more halogen atoms, a carbonyl group, a carboxyl group, an ester function or an ether function.

In a further preferred embodiment of the invention, the substituted or unsubstituted alkyl or alkenyl alcohol has a linear or branched carbon chain, preferably a linear carbon chain.

In a further preferred embodiment of the invention, the alkyl or alkenyl alcohol substituted with an ether function is a substituted or unsubstituted ethoxylated aromatic alcohol, preferably having 8 to 16 carbon atoms, more preferably 8 to 12 carbon atoms.

In a further preferred embodiment of the invention, the alkyl or alkenyl alcohol substituted with an ether function is an etherified glycol or oliglycol, for example ethylene glycol phenol ether (phenoxyethanol) or an ether of ethylene glycol and a substituted phenol, e.g. a methylated, halogenated or methoxylated phenol.

In one preferred embodiment of the invention, the one alcohol or at least one alcohol from the mixture of alcohols used in step 2 of the reaction is an alkyl aryl alcohol having 7 to 13, preferably 7 to 10, in particular 7 (i.e. benzyl alcohol),

carbon atoms, or is an unsubstituted alkyl alcohol, having 2 to 20, preferably 2 to 18 carbon atoms, which has a linear or branched, preferably linear, carbon chain, or is a substituted alkyl alcohol, having 2 to 4, preferably 2, carbon atoms, which is substituted with an ether function, where the second part of the ether is derived from a unsubstituted or substituted phenol, which is preferably unsubstituted and, if substituted, is preferably a methylated, halogenated or methoxylated phenol, or an ethoxylated unsubstituted or substituted phenol, which is preferably unsubstituted and, if substituted, is preferably a methylated, halogenated or methoxylated phenol.

In a particularly preferred embodiment of the invention, the one alcohol or at least one alcohol from the mixture of alcohols used in step 2 of the reaction is selected from the group consisting of lauryl alcohol (dodecanol), myristyl alcohol (tetradecanol), a mixture of lauryl alcohol and myristyl alcohol, cetearyl alcohol (a mixture of hexadecanol and octadecanol), stearyl alcohol (octadecanol) and coconut fatty alcohol (a mixture of C6 to C18 alcohols), phenoxyethanol, phenethyl alcohol and benzyl alcohol, and is preferably selected from the group consisting of phenoxyethanol, phenethyl alcohol and benzyl alcohol.

In one particularly preferred embodiment of the invention, the alkoxylated polycarboxylic acid esters of the invention are obtainable by first reacting trimellitic acid anhydride, with a polyethylene glycol monomethyl ether with a molecular mass Mn of 500 to 1500 and in a second step reacting the resulting product with benzyl alcohol, phenoxyethanol or a mixture of benzyl alcohol and phenoxyethanol.

In another particularly preferred embodiment of the invention, the alkoxylated polycarboxylic acid esters of the invention are obtainable by first reacting trimellitic acid anhydride, with a polyethylene glycol monomethyl ether with a molecular mass Mn of 500 to 1500 and in a second step reacting the resulting product with an unsubstituted alkyl alcohol with 12 to 18 carbon atoms.

In a further preferred embodiment of the invention the alkoxylated polycarboxylic acid esters of the invention are compounds or mixtures of compounds of the formula (II),

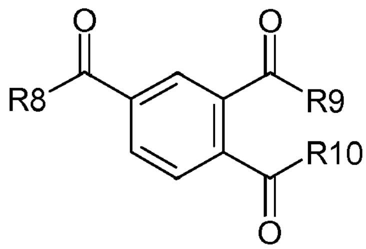

(II)

wherein R8, R9 and R10 are selected from (a) and (b) such that at least one of R8, R9 and R10 is (b) and at least one of R8, R9 and R10 is (a), preferably R8 is (a) and one or both of R9 and R10 are (b), more preferably R8 is (a) and one of R9 or R10 is (b) and the other is (a), where:

(a) is alkylaryloxy having 7 to 13 carbon atoms or substituted or unsubstituted alkoxy or alkenyloxy having 2 to 20 carbon atoms, preferably alkylaryloxy having 7 to 10 carbon atoms, substituted or unsubstituted alkoxy or alkenyloxy having 12 to 18 carbon atoms or substituted alkoxy having 2 to 4 carbon atoms, more preferably alkylaryloxy having 7 to 10 carbon atoms or unsubstituted alkoxy or alkenyloxy having 12 to 18 carbon atoms, which is preferably straight chain, or alkoxy having 2 or 3 carbon atoms which is substituted with an ether group, most preferably an unsubstituted alkyl alcohol having 12 to 18 carbon atoms, or alkoxy with 2 carbon atoms which is substituted with a phenoxy or ethoxyphenoxy group, where the phenyl ring in said phenoxy groups may be further substituted, and

(b) is an alcohol alkoxylate group of formula (I')

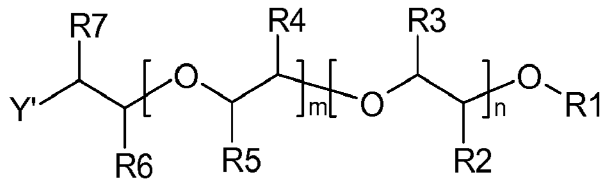

(I')

wherein R1 to R7, m and n have the same meanings and preferred meanings as in Formula (I)
and
Y' is O.

Preferred meanings of (a) follow from the preferred alcohols of the alcohol component.

In a further preferred embodiment of the invention, R8 of formula (II) is equal to one of R9 or R10 and is an alkylaryloxy having 7 to 13 carbon atoms or substituted or unsubstituted alkyloxy or alkenyloxy having 2 to 20 carbon atoms, preferably alkylaryloxy having 7 to 10 carbon atoms or substituted or unsubstituted alkyloxy or alkenyloxy having 12 to 18 carbon atoms, more preferably an alkylaryloxy group having 7 to 10 carbon atoms, in particular benzyloxy, or unsubstituted alkyloxy having 12 to 18 carbon atoms, in particular lauryloxy, myristyloxy, a mixture of lauryloxy and myristyloxy, palmityloxy, stearyloxy, or a mixture of palmityloxy and stearyloxy (cetearyloxy).
In a further preferred embodiment of the invention, R8 of formula (II) is equal to one of R9 or R10 and is a substituted or unsubstituted ethoxylated aromatic alcohol residue having 8 to 16 carbon atoms, preferably 8 to 12 carbon atoms, in particular phenoxyethoxy.
In a further preferred embodiment of the invention, formula (I') is a polyethylene glycol monomethyl ether residue with a molecular mass Mn of 251 to 4400, preferably with a molecular mass Mn of 350 to 4000, even more preferably with a molecular mass Mn of 450 to 3000 and particularly preferably with a molecular mass Mn of 500 to 2500.
Further preferred embodiments of the invention may arise from the combination of above described preferred embodiments.

Preparation Process

In a further aspect of the invention there is provided a process for producing the alkoxylated polycarboxylic acid esters of the invention, preferably those of formula (II), comprising the steps of firstly reacting an aromatic polycarboxylic acid containing at least three carboxylic acid units or an anhydride derived therefrom with an alcohol alkoxylate and secondly reacting the resulting product with an alcohol or a mixture of alcohols, preferably with an alcohol.
In the preparation of the alkoxylated polycarboxylic acid esters of the invention, reaction step 1 is performed either in the presence or absence of an additional solvent, preferably in the absence of an additional solvent.
Solvents suitable for the reaction of an alcohol with an aromatic acid anhydride are known to persons skilled in the art. These solvents include but are not limited to aromatic hydrocarbons, for example but not limited to benzene, toluene, or xylene, non-protic polar solvents, for example but not limited to anisole, aromatic ethers, high boiling alkyl ethers, dimethylformamide and dimethylsulfoxide.
In a preferred embodiment, the alcohol alkoxylate used as a reagent, preferably the alcohol alkoxylate of formula (I), can serve as a solvent at the reaction temperature.
In the preparation of alkoxylated polycarboxylic acid esters of the invention, reaction step 1 is generally conducted with 0.7 to 1.5 molar equivalents of the alcohol alkoxylate, preferably 0.8 to 1.4 molar equivalents, more preferably 0.9 to 1.3 molar equivalents and most preferably 1.0 to 1.2 molar equivalents.
Molar equivalents are here defined relative to the aromatic polycarboxylic acid.
In the preparation of the alkoxylated polycarboxylic acid esters of the invention, reaction step 1 is performed in the presence or absence of a catalyst, preferably in the absence of a catalyst.
Catalysts for the reaction of an alcohol with an acid anhydride are known to persons skilled in the art. These catalysts include, but are not limited to Lewis acids such as zinc chloride and ferric chloride, Bronstedt acids, such as sulfuric acid, perchloric acid, and trifluoroacetic acid, and tertiary amines like 4-dimethyl amino pyridine.
In the preparation of the alkoxylated polycarboxylic acid esters of the invention, reaction step 1 is generally performed at a temperature of 50 to 150 °C, preferably at a temperature of 60 to 140 °C even more preferably at a temperature of 70 to 130 °C and most preferably at a temperature of 80 to 120 °C.
In the preparation of the alkoxylated polycarboxylic acid esters of the invention, reaction step 2 is performed in the presence or absence of an additional solvent, preferably in the absence of an additional solvent.
Solvents suitable for the esterification of an alcohol or mixture of alcohols with a carboxylic acid are known to persons skilled in the art. These solvents include but are not limited to aromatic hydrocarbons, for example benzene, toluene, or xylene, non-protic polar solvents, for example anisole, aromatic ethers, high boiling alkyl ethers, dimethylformamide and dimethylsulfoxide.
In a preferred embodiment, the solvent used in the second step of the reaction is the same as the solvent used in the first step of the reaction.
In another preferred embodiment, the alcohol or mixture of alcohols used as reagents in the second step of the reaction serves as a solvent.
In another preferred embodiment, the reaction is performed in one pot without changing the solvent or reaction vessel between the first and the second reaction step.
In the preparation of the alkoxylated polycarboxylic acid esters of the invention, reaction step 2 is performed in the presence or absence of a catalyst, preferably in the presence of a Bronstedt acid or Lewis acid catalyst.
Suitable catalysts for esterification reactions are well known to persons skilled in the art. These catalysts include but are not limited to sulfonic acids such as methane sulfonic acid, para toluene sulfonic acid, dodecylbenzene sulfonic acids or other alkylbenzene sulfonic acids, sulfuric acid, perchloric acid, trifluoroacetic acid, phosphorus pentoxide,

phosphinic acid, phosphoric acid, heteropolycids, supported or soluble metal salts like tin salts, zinc salts, iron salts or titanium alkoxides, cation-exchange resins and zeolites.

In the preparation of the alkoxylated polycarboxylic acid esters of the invention, reaction step 2 is generally conducted with 1.8 to 3.5 molar equivalents of the alcohol or mixture of alcohols, preferably 1.9 to 3.0 molar equivalents and more preferably 2.0 to 2.8 molar equivalents.

Molar equivalents are here defined relative to the aromatic polycarboxylic acid.

In the preparation of the alkoxylated polycarboxylic acid esters of the invention, reaction step 2 is generally performed at a temperature of 130 to 250 °C, preferably at a temperature of 150 to 220 °C, even more preferably at a temperature of 160 to 200 °C and most preferably at a temperature of 170 to 200 °C.

The alkoxylated polycarboxylic acid esters of the invention, in particular those of the formula (II), are used as anti-redeposition agents in particular in washing or laundry compositions and applications.

The alkoxylated polycarboxylic acid esters of the invention have further uses as dispersants, in particular in washing or laundry compositions and applications.

EXAMPLES

The examples below are intended to illustrate the invention in detail without, however, limiting it thereto.

Trimellitic acid was used as purchased from ACROS Organics. Trimellitic acid anhydride and pyromellitic acid was used as purchased from Alfa Aesar. Phenoxyethanol, para-toluene sulfonic acid and titanium isopropoxide were used as purchased from Merck. Methanesulfonic acid, 4-dodecylbenzenesulfonic acid mixture of isomers and benzyl alcohol were used as purchased from Sigma Aldrich.

Lauryl/myristyl alcohol and cetearyl alcohol were used in technical grade quality and their molecular masses were determined prior to use by measuring the hydroxyl value (OH-value) and subsequently calculating the molecular mass (per hydroxyl function, "Gebrauchsmol"). In this case the OH-value may be measured according to DIN 53240.

The acid number (acid value) may be measured according to DIN EN ISO 2114.

Polyglykols M are mono hydroxy-functional polyethylene glycol monomethyl ethers (M-PEG, CAS-Nr. 9004-74-4).

Polyglykol M 500 is a linear, mono hydroxy-functional polyethylene glycol monomethyl ether (M-PEG) that has a molecular mass of 470-530 g/mol.

Polyglykol M 750 is a linear, mono hydroxy-functional polyethylene glycol monomethyl ether (M-PEG) that has a molecular mass of 720-780 g/mol.

Polyglykol M 1000 is a linear, mono hydroxy-functional polyethylene glycol monomethyl ether (M-PEG) that has a molecular mass of 970 - 1060 g/mol.

Polyglykol M 1250 is a linear, mono hydroxy-functional polyethylene glycol monomethyl ether (M-PEG) that has a molecular mass of 1125-1375 g/mol.

Polyglykol M 2000 is a linear, mono hydroxy-functional polyethylene glycol monomethyl ether (M-PEG) that has a molecular mass of 1800 - 2200 g/mol.

The degree of alkoxylation of the used methyl polyglykols may be checked using NMR spectroscopy, for example using $^{1}H$-NMR spectroscopy in analogy to the method described in R. Stevanova, D. Rankoff, S. Panayotova, S.L. Spassov, J. Am. Oil Chem. Soc., 65, 1516-1518 (1988). For this purpose, the samples are derivatised by reacting them with trichloro acetyl isocyanate and measured as solutions in deuterated chloroform containing 1 weight-% (1 wt.-%) of tetramethyl silane as an internal standard.

The esterification reactions were controlled by determining the residual content of alcohol (e.g. benzyl alcohol, phenoxyethanol, lauryl/myristyl alcohol and cetearyl alcohol) by GC-FID. Calibration was performed with pure starting materials. Gas chromatography (GC) was performed using a Hewlett Packard GC 6890 with autosampler, coupled with a flame-ionisation detector (FID).

For the quantification of benzyl alcohol, samples were separated on a 50 m x 0.2 mm, 0.33 μm film column. The column temperature was initially held at 50 °C, then the temperature was raised to 175 °C at a rate of 5 °C per minute and from 175 °C to 300 °C at a rate of 25 °C per minute. The injector temperature was maintained at 250 °C and the injection volume was 1.0 μL in the split mode. Helium was used as a carrier gas with a constant pressure of 1.8 bar. The samples were prepared by diluting 500 mg of sample (duplicate analysis) with 5 ml of methanol.

For the quantification of phenoxyethanol, cetearyl alcohol and lauryl/myristyl alcohol, samples were separated on a 25 m x 0.32 mm, 0.52 μm film column. The column temperature was initially held at 50 °C, then the temperature was raised to 250 °C at a rate of 10 °C per minute and held for 6.5 minutes. The injector temperature was maintained at 250 °C and the injection volume was 1.0 μL in the split mode. Helium was used as a carrier gas with a constant pressure of 0.9 bar. The samples were prepared by diluting 500 mg of sample (duplicate analysis) with 5 ml of methanol.

Thin layer chromatography (TLC) was performed using TLC Silica Gel 60 F254 plates from Merck. The aromatic compounds were detected by UV light (254 and 366 nm simultaneously).

Examples 1 to 22 were performed according to a standard procedure. All reagents and quantities are listed in Table I.

The alcohol alkoxylate of choice was heated to 80 °C with stirring under nitrogen. The polycarboxylic acid or acid anhydride of choice was then added in portions over 5 minutes. The reaction mixture was then stirred for 2.5 hours at 80 °C. The product, henceforth termed precursor, was isolated and the acid number determined - these are listed in Table I in the column AN1.

Some amount of the precursor (listed in the column "PC" of Table I) was mixed with the alcohol and catalyst of choice and heated to the temperature listed in Table I while stirring under nitrogen. The reaction mixture was stirred at the temperature listed for the time denoted in Table I and water was distilled off. For all examples except examples 10 and 11, the product was then isolated after cooling and the acid number of the final product determined - listed as AN2 in Table I.

In the cases of examples 10 and 11, a vacuum of 500 mbar was applied at 180 °C for 3 h under stirring after completion of stirring for the time listed in Table I.

In the case of comparative example C1, the alcohol Polyglykol M750 was heated to 80 °C with stirring under nitrogen. Trimellitic acid anhydride was then added in portions over 5 minutes. The reaction mixture was then stirred for 2.5 hours at 80 °C. The product, was isolated and the acid number determined.

In the case of examples 23-27, the alcohol alkoxylate of choice was mixed with the polycarboxylic acid of choice, the alcohol and catalyst of choice and heated to the temperature listed in Table I while stirring under nitrogen. The reaction mixture was stirred at the temperature listed for the time denoted in Table I and water was distilled off. In the cases of examples 25-27, the product was then isolated after cooling and the acid number of the final product determined - listed as AN2 in Table I. In the case of examples 23-24, a vacuum of 500 mbar was applied at 180 °C for 3 h under stirring after completion of stirring for the time listed in Table I. Subsequently, the product was isolated after cooling and the acid number of the final product determined - listed as AN2 in Table 1.

The abbreviations used in Table I are as follows:

| | |
|---|---|
| AA | alcohol alkoxylate |
| PCA | polycarboxylic acid |
| PC | precursor |
| BA | benzyl alcohol |
| PE | phenoxyethanol |
| C16/18 | cetearyl alcohol |
| C12/C14 | lauryl/myristyl alcohol |
| AN1 | acid number of the precursor |
| AN2 | acid number of the final product |
| M500 | polyglykol M 500 |
| M750 | polyglykol M 750 |
| M1000 | polyglykol M 1000 |
| M1250 | polyglykol M 1250 |
| M2000 | polyglykol M 2000 |
| TMA | trimellitic acid |
| TMAA | trimellitic acid anhydride |
| PMA | pyromellitic acid |
| pTsOH | p-toluene sulfonic acid |
| DDBSA | 4-dodecyl benzene sulfonic acid |
| MSA | methane sulfonic acid |
| TIP | titanium isopropoxide |

Table I: Examples of Alkoxylated Polycarboxylic Acid Esters of the Invention

| | AA | PCA | PC/g | BA/ g | PE/ g | C16/ 18/g | C12/ g | Cat | T/ °C | Time / hr | AN1/mg KOH/g | AN2 / mg KOH/g | Residual Alcohol / wt.-% |
|---|---|---|---|---|---|---|---|---|---|---|---|---|---|
| 1 | M750, 450 g | TMAA, 115.3 g | 130 | 30.2 | | | | pTsOH, 0.16 g | 180 | 36 | 120.6 | 34 | 3.6 |
| 2 | M750, 450 g | TMAA, 115.3 g | 130 | 30.2 | | | | pTsOH, 0.16 g | 200 | 36 | 120.6 | 26.3 | 0.6 |
| 3 | M750, 450 g | TMAA, 115.3 g | 130 | 38 | | | | pTsOH, 0.17 g | 180 | 37 | 121.3 | 24.4 | 2 |
| 4 | M750, 450 g | TMAA, 115.3 g | 130 | 37.7 | | | | pTsOH, 0.17 g | 200 | 44.5 | 130.6 | 23.4 | 1.1 |
| 5 | M750, 1000 g | TMAA, 256.2 g | 130 | 30.1 | | | | DDBSA, 0.16g | 180 | 39 | 120 | 29.6 | 6.1 |
| 6 | M750, 1000 g | TMAA, 256.2 g | 130 | 30.1 | | | | MSA, 0.16 g | 180 | 39 | 120 | 34 | 3.1 |
| 7 | M750, 1000 g | TMAA, 256.2 g | 320 | 92.5 | | | | pTsOH, 0.41 g | 180 | 43 | 120 | 26.5 | 4.2 |
| 8 | M750, 1000 g | TMAA, 256.2 g | 131.7 | 30.5 | | | | TIP, 0.16 g | 180 | 25 | 120 | 14 | 1.2 |
| 9 | M750, 1000 g | TMAA, 256.2 g | 129.5 | 29.9 | | | | TIP, 0.16 g | 200 | 20 | 120 | 25.4 | 0.5 |
| 10 | M750, 1000 g | TMAA, 256.2 g | 127.1 | 36.7 | | | | TIP, 0.16 g | 180 | 21 | 120 | 15 | 9.6 |
| 11 | M750, 1000 g | TMAA, 256.2 g | 115.5 | 40.1 | | | | TIP, 0.16 g | 180 | 21 | 120 | 6.7 | 13.8 |
| 12 | M1250, 450 g | TMAA, 69.2 g | 430 | 64.5 | | | | pTsOH, 0.49 g | 180 | 45 | 78.9 | 29.1 | 3 |
| 13 | M2000, 995.1 g | TMAA, 95.6 g | 400 | 49.4 | | | | pTsOH, 0.45 g | 180 | 47 | 51.2 | 22.5 | 6.1 |
| 14 | M1250, 1300.0 g | TMAA, 199.8 g | 400 | 75.0 | | | | pTsOH, 0.48 g | 180 | 40 | 80.0 | 27.0 | 2.5 |

(continued)

| | AA | PCA | PC/g | BA/ g | PE/ g | C16/ 18/g | C12/ g | Cat | T/ °C | Time / hr | AN1/mg KOH/g | AN2 / mg KOH/g | Residual Alcohol / wt.-% |
|---|---|---|---|---|---|---|---|---|---|---|---|---|---|
| 15 | M1250, 1300.0 g | TMAA, 199.8 g | 400 | | 95.8 | | | pTsOH, 0.50 g | 180 | 40 | 80.0 | 18.8 | 1.3 |
| 16 | M1250, 2800.0 g | TMAA, 430.4 g | 400 | | | 146.1 | | pTsOH, 0.55 g | 180 | 41 | 79.0 | 15.6 | 8.7 |
| 17 | M1250, 2800.0 g | TMAA, 430.4 g | 400 | | | | 108.5 | pTsOH, 0.51 g | 180 | 41 | 79.0 | 1.7 | 14.6 |
| 18 | M750, 806.4 g | TMAA, 213 g | 320 | | 120.1 | | | pTsOH, 0.44 g | 180 | 43 | 121.9 | 17.3 | 1.1 |
| 19 | M750, 806.4 g | TMAA, 213 g | 320 | | | 183.1 | | pTsOH, 0.49 g | 180 | 43 | 121.9 | 15.1 | 7 |
| 20 | M750, 806.4 g | TMAA, 213 g | 332.8 | | | | 134.8 | pTsOH, 0.50 g | 180 | 43 | 121.9 | 15.9 | 4.2 |
| 21 | M500, 637.8 g | TMAA, 252.7 g | 333.3 | 130.2 | | | | pTsOH, 0.46 g | 180 | 40 | 162.1 | 36.1 | 2.9 |
| 22 | M1000, 998.9 g | TMAA, 193.3 g | 360 | 85 | | | | pTsOH, 0.45 g | 180 | 40 | 121.9 | 27.9 | 4.2 |
| 23 | M750 88.5 g | PMA, 30.0 g | - | 38.3 | | | | TIP, 0.16 g | 180 | 20.5 | - | 25,7 | 2.5 |
| 24 | M750, 89.2 g | TMA, 25.0 g | - | 25.7 | | | | TIP, 0.14 g | 180 | 20.5 | - | 23.9 | 1.1 |
| 25 | M750, 100 g | TMA, 28.0 g | - | 28.8 | | | | pTsOH, 0.16 g | 180 | 42 | - | 33.6 | 3.0 |
| 26 | M750, 100 g | PMA, 33.9 g | - | 43.3 | | | | pTsOH, 0.18 g | 180 | 41.5 | - | 37.8 | 3.9 |
| 27 | M1250, 125 g | PMA, 25.4 g | - | 33.4 | | | | pTsOH, 0.18 g | 180 | 45 | - | 33.1 | 4.9 |
| C1 | M750, 1000 g | TMAA, 256.2 g | - | - | | | | - | - | 2.5 | 120 | - | - |

An aqueous liquid laundry detergent of the following formulation was prepared:

Table II: Liquid laundry detergent formulation

| Ingredient | weight-% |
|---|---|
| Mono propylene glycol | 2.2 |
| Triethanolamine | 1.5 |
| $C_{12}$-$C_{15}$ alcohol ethoxylate with 7 moles of ethylene oxide | 1.2 |
| Linear alkyl benzene sulfonate | 4.6 |
| Sodium laureth ether sulphate with 1 mole of ethylene oxide | 5.8 |
| Citric acid | 2.0 |
| $CaCl_2$ dihydrate | 0.2 |
| NaCl | 0.2 |
| Tinopal® CBS-X (fluorescer BASF) | 0.3 |
| Sodium hydroxide | to pH = 8.4 |
| EXEMPLARY alkoxylated polycarboxylic acid esters of the invention | see text |
| Water | balance |

Application Example 1 - Anti-Redeposition Benefit

The formulations of Table II were used to wash eight 5x5 cm knitted cotton cloth pieces in a Tergotometer set at 200 rpm (revolutions per minute). A one hour wash was conducted in 800 ml of water with 26° French hardness at 20 °C, with 2.3 g/l of the formulation shown in Table II. To simulate particulate soil that could redeposit, 0.04 g/l of 100% compressed carbon black (ex Alfa Aesar) was added to the wash liquor. To simulate oily sebaceous soil, 7.2 g of an SBL2004 soil strip (ex Warwick Equest) was added to the wash liquor.

Once the wash had been completed, the cotton swatches were rinsed once in 400 ml clean water, removed, dried and the colour measured on a reflectometer and expressed as the CIE L*a*b* values. The anti-redeposition benefit was expressed as the ΔL value:

$$\Delta L = L^*(\text{dispersant}) - L^*(\text{control})$$

The larger the ΔL value, the greater the prevention of deposition of the carbon black soil. 95% confidence limits based on the 8 separate cotton swatches were calculated. Formulations were made with and without the addition of 8.7 wt.-% of the dispersants of Table I. The results are given in Table III.

Table III: Anti-redeposition benefit

| Exemplary dispersant | ΔL | 95 % |
|---|---|---|
| Example 1 | 3.26 | 0.20 |
| Example 2 | 4.01 | 0.31 |
| Example 3 | 4.03 | 0.20 |
| Example 4 | 4.41 | 0.25 |
| Example 8 | 2.84 | 0.24 |
| Example 9 | 2.8 | 0.1 |
| Example 10 | 2.75 | 0.27 |
| Example 15 | 2.52 | 0.27 |
| Example 16 | 2.52 | 0.27 |

(continued)

| Exemplary dispersant | ΔL | 95 % |
|---|---|---|
| Example 18 | 3.10 | 0.15 |
| Example 21 | 3.41 | 0.23 |
| Example 22 | 2.26 | 0.27 |
| Example C1 | 0.48 | 0.26 |

The alkoxylated polycarboxylic acid esters of the invention enhance anti-redeposition.

## Claims

1. Alkoxylated polycarboxylic acid esters, obtainable by first reacting an aromatic polycarboxylic acid containing at least three carboxylic acid units or an anhydride derived therefrom, preferably an aromatic polycarboxylic acid containing three or four carboxylic acid units or an anhydride derived therefrom, more preferably an aromatic polycarboxylic acid containing three carboxylic acid units or an anhydride derived therefrom, even more preferably trimellitic acid or trimellitic acid anhydride, most preferably trimellitic acid anhydride, with an alcohol alkoxylate and in a second step reacting the resulting product with an alcohol or a mixture of alcohols, preferably with an alcohol.

2. The alkoxylated polycarboxylic acid esters according to claim 1, **characterised in that** the alcohol alkoxylate is described by formula (I),

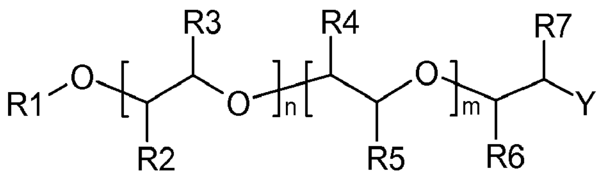

(I)

wherein R1 is a substituted or unsubstituted alkyl or alkenyl group having 1 to 20 carbon atoms, an aryl or alkyl aryl group having 6 to 20 carbon atoms, or H, preferably a substituted or unsubstituted alkyl or alkenyl group having 1 to 12 carbon atoms or an aryl or alkyl aryl group having 6 to 13 carbon atoms, more preferably a substituted or unsubstituted alkyl or alkenyl group having 1 to 6 carbon atoms, and most preferably a methyl group,
R2 to R5 are independently of each other hydrogen or an alkyl group having 1 to 4 carbon atoms, preferably hydrogen or methyl,
where the substituents R2 to R5 are chosen such that both of either R2 and R3 or R4 and R5 are hydrogen and at least one of the other substituents is different from hydrogen, preferably such that three of the substituents R2 to R5 are hydrogen, and even more preferably such that three of the substituents R2 to R5 are hydrogen and the other substituent is a methyl group,
n and m are independently of each other, based on a molar average, numbers of from 0 to 100 such that n+m is of from 4 to 100, preferably of from 8 to 70, more preferably of from 10 to 60 and even more preferably of from 12 to 50,
where in the case that R2 and R3 are both hydrogen, n is a number of from 4 to 100 and m is a number of from 0 to 50, preferably n is from 8 to 70 and m is from 0 to 30, more preferably n is from 10 to 60 and m is from 0 to 25 and even more preferably n is from 12 to 50 and m is from 0 to 20 and when m > 0, the ratio of n to m is larger than 1, preferably at least 2, more preferably at least 3 and even more preferably at least 4,
where in the case that R4 and R5 are both hydrogen, m is a number of from 4 to 100 and n is a number of from 0 to 50, preferably m is from 8 to 70 and n is from 0 to 30, more preferably m is from 10 to 60 and n is from 0 to 25 and even more preferably m is from 12 to 50 and n is from 0 to 20 and when n > 0, the ratio of m to n is larger than 1, preferably at least 2, more preferably at least 3 and even more preferably at least 4,
where in the case that both n and m are > 0, the units are distributed blockwise, alternating, periodically and/or statistically,
R6 and R7 are independently of each other hydrogen or an alkyl group having 1 to 4 carbon atoms, preferably hydrogen or methyl, and at least one of R6 and R7 is methyl, and

Y is OH.

3. The alkoxylated polycarboxylic acid esters according to claim 1 or 2, **characterised in that** the alcohol alkoxylate is an ethoxylated alcohol or an ethoxylated and propoxylated alcohol, wherein the ratio of ethylene oxide units to propylene oxide units is larger than 1, preferably at least 2, more preferably at least 3 and even more preferably at least 4, and is preferably an ethoxylated and propoxylated alcohol.

4. The alkoxylated polycarboxylic acid esters according to one or more of claims 1 to 3, **characterised in that** the alcohol alkoxylate of formula (I) is a polyethylene glycol monomethyl ether or an alcohol-terminated methyl-ethoxylated-propoxylated polyether with a molecular mass Mn of 252 to 4900, preferably with a molecular mass Mn of 350 to 4000, even more preferably with a molecular mass Mn of 450 to 3000 and particularly preferably with a molecular mass Mn of 500 to 2500 and is preferably a polyethylene glycol monomethyl ether with a molecular mass Mn of 252 to 4400, preferably with a molecular mass Mn of 350 to 4000, even more preferably with a molecular mass Mn of 450 to 3000 and particularly preferably with a molecular mass Mn of 500 to 2500.

5. The alkoxylated polycarboxylic acid esters according to one or more of claims 1 to 4, **characterised in that** the alcohol or at least one alcohol from the mixture of alcohols used in step 2 of the reaction is an alkyl aryl alcohol having 7 to 13 carbon atoms or a substituted or unsubstituted alkyl or alkenyl alcohol having 2 to 20 carbon atoms, preferably an alkyl aryl alcohol having 7 to 10 carbon atoms, a substituted or unsubstituted alkyl or alkenyl alcohol having 12 to 18 carbon atoms or a substituted alkyl alcohol having 2 to 4 carbon atoms, more preferably an alkyl aryl alcohol having 7 to 10 carbon atoms, an unsubstituted alkyl or alkenyl alcohol having 12 to 18 carbon atoms, which is preferably straight chain, or an alkyl alcohol having 2 or 3 carbon atoms which is substituted with an ether function, most preferably an unsubstituted alkyl alcohol having 12 to 18 carbon atoms, or an alkyl alcohol with 2 carbon atoms which is substituted with a phenoxy or ethoxyphenoxy group, where the phenyl ring in said phenoxy groups may be further substituted.

6. The alkoxylated polycarboxylic acid amides according to one or more of claims 1 to 5, **characterised in that** the alcohol or at least one alcohol from the mixture of alcohols used in step 2 of the reaction is selected from the group consisting of lauryl alcohol (dodecanol), myristyl alcohol (tetradecanol), a mixture of lauryl alcohol and myristyl alcohol, cetearyl alcohol (a mixture of hexadecanol and octadecanol), stearyl alcohol (octadecanol) and coconut fatty alcohol (a mixture of $C_6$ to $C_{18}$ alcohols), phenoxyethanol, phenethyl alcohol and benzyl alcohol, and is preferably selected from the group consisting of lauryl/myristyl alcohol, cetearyl alcohol and phenoxyethanol, and is more preferably selected from the group consisting of lauryl/myristyl alcohol and cetearyl alcohol.

7. The alkoxylated polycarboxylic acid esters according to formula (II)

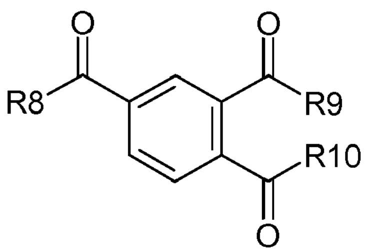

(II)

wherein R8, R9 and R10 are selected from (a) and (b) such that at least one of R8, R9 and R10 is (b) and at least one of R8, R9 and R10 is (a), preferably R8 is (a) and one or both of R9 and R10 are (b), more preferably R8 is (a) and one of R9 or R10 is (b) and the other is (a), where:

(a) is alkylaryloxy having 7 to 13 carbon atoms or substituted or unsubstituted alkoxy or alkenyloxy having 2 to 20 carbon atoms, preferably alkylaryloxy having 7 to 10 carbon atoms, substituted or unsubstituted alkoxy or alkenyloxy having 12 to 18 carbon atoms or substituted alkoxy having 2 to 4 carbon atoms, more preferably alkylaryloxy having 7 to 10 carbon atoms or unsubstituted alkoxy or alkenyloxy having 12 to 18 carbon atoms, which is preferably straight chain, or alkoxy having 2 or 3 carbon atoms which is substituted with an ether group, most preferably an unsubstituted alkyl alcohol having 12 to 18 carbon atoms, or alkoxy with 2 carbon atoms which is substituted with a phenoxy or ethoxyphenoxy group, where the phenyl ring in said phenoxy groups may be further substituted, and
(b) is an alcohol alkoxylate group of formula (I'),

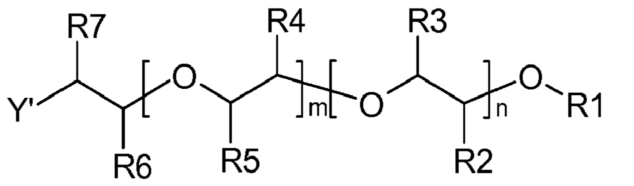

(I')

wherein R1 is a substituted or unsubstituted alkyl or alkenyl group having 1 to 20 carbon atoms, an aryl or alkyl aryl group having 6 to 20 carbon atoms, or H, preferably a substituted or unsubstituted alkyl or alkenyl group having 1 to 12 carbon atoms or an aryl or alkyl aryl group having 6 to 13 carbon atoms, more preferably a substituted or unsubstituted alkyl or alkenyl group having 1 to 6 carbon atoms, and most preferably a methyl group,

R2 to R5 are independently of each other hydrogen, or an alkyl group having 1 to 4 carbon atoms, preferably hydrogen or methyl,

where the substituents R2 to R5 are chosen such that both of either R2 and R3 or R4 and R5 are hydrogen and at least one of the other substituents is different from hydrogen, preferably such that three of the substituents R2 to R5 are hydrogen, and even more preferably such that three of the substituents R2 to R5 are hydrogen and the other substituent is a methyl group,

n and m are independently of each, based on a molar average, numbers of from 0 to 100 such that n+m is a number of from 4 to 100, preferably of from 8 to 70, more preferably of from 10 to 60 and even more preferably of from 12 to 50,

where in the case that R2 and R3 are both hydrogen, n is a number of from 4 to 100 and m is a number of from 0 to 50, preferably n is from 8 to 70 and m is from 0 to 30, more preferably n is from 10 to 60 and m is from 0 to 25 and even more preferably n is from 12 to 50 and m is from 0 to 20 and when m > 0, the ratio of n to m is larger than 1, preferably at least 2, more preferably at least 3 and even more preferably at least 4,

where in the case that R4 and R5 are both hydrogen, m is a number of from 4 to 100 and n is a number of from 0 to 50, preferably m is from 8 to 70 and n is from 0 to 30, more preferably m is from 10 to 60 and n is from 0 to 25 and even more preferably m is from 12 to 50 and n is from 0 to 20 and when n > 0, the ratio of m to n is larger than 1, preferably at least 2, more preferably at least 3 and even more preferably at least 4,

where in the case that both n and m are > 0, the units can be distributed blockwise, alternating, periodically and/or statistically,

R6 and R7 are independently of each other hydrogen, or an alkyl group having 1 to 4 carbon atoms, preferably hydrogen or methyl, and at least one of R6 and R7 is methyl, and

Y' is O,

are preferably in the form of mixtures and are preferably obtainable by the reaction steps described in one or more of claims 1 to 6.

**8.** The alkoxylated polycarboxylic acid esters according to claim 7, where formula (II) is **characterised in that** R8 is equal to one of R9 or R10 and is an alkylaryloxy having 7 to 13 carbon atoms or a substituted or unsubstituted alkyloxy or alkenyloxy having 2 to 20 carbon atoms, preferably alkylaryloxy having 7 to 10 carbon atoms or substituted or unsubstituted alkyloxy or alkenyloxy having 12 to 18 carbon atoms, more preferably alkylaryloxy having 7 to 10 carbon atoms.

**9.** The alkoxylated polycarboxylic acid esters according to claim 7 or 8, **characterised in that** R8 is equal to one of R9 or R10 and is a substituted or unsubstituted ethoxylated aromatic alcohol residue having 8 to 16 carbon atoms, preferably 8 to 12 carbon atoms.

**10.** The alkoxylated polycarboxylic acid esters according to one or more of claims 7 to 9, where formula (II) is **characterised in that** (b) is a polyethylene glycol monomethyl ether residue of formula (I') with a molecular mass Mn of 251 to 4400, preferably with a molecular mass Mn of 350 to 4000, even more preferably with a molecular mass Mn of 450 to 3000 and particularly preferably with a molecular mass Mn of 500 to 2500.

**11.** A process for producing alkoxylated polycarboxylic acid esters according to one or more of claims 1 to 10, comprising the steps of firstly reacting an aromatic polycarboxylic acid containing at least three carboxylic acid units or an anhydride derived therefrom with an alcohol alkoxylate, and secondly reacting the resulting product with an alcohol or a mixture of alcohols, preferably with an alcohol.

**12.** The process according to claim 11,**characterised in that** the reaction of step 1 is conducted with 0.7 to 1.5 molar equivalents of the alcohol alkoxylate, preferably 0.8 to 1.4 molar equivalents, more preferably 0.9 to 1.3 molar equivalents and most preferably 1.0 to 1.2 molar equivalents.

**13.** The process according to claim 11 or 12 **characterised in that** the reaction of step one is performed at a temperature of 50 to 150 °C, preferably at a temperature of 60 to 140 °C even more preferably at a temperature of 70 to 130 °C and most preferably at a temperature of 80 to 120 °C.

**14.** The process according to one or more of claims 11 to 13, **characterised in that** the reaction of step 2 is conducted with 1.8 to 3.5 molar equivalents of the alcohol or mixture of alcohols, preferably 1.9 to 3.0 molar equivalents and more preferably 2.0 to 2.8 molar equivalents.

Europäisches Patentamt
European Patent Office
Office européen des brevets

# EUROPEAN SEARCH REPORT

Application Number
EP 17 18 0301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2016/075178 A1 (CLARIANT INT LTD [CH]) 19 May 2016 (2016-05-19)<br>* claim 1; examples V,VI *<br>* page 1, lines 3-6 * | 1-14 | INV.<br>C08G63/00 |
| A | EP 0 035 478 A1 (EKA AB [SE]) 9 September 1981 (1981-09-09)<br>* claims 1,6; example 1 * | 1-14 | |
| A | EP 2 730 597 A1 (SANYO CHEMICAL IND LTD [JP]) 14 May 2014 (2014-05-14)<br>* claims 1,7; example 1 * | 1-14 | |

TECHNICAL FIELDS SEARCHED (IPC)

C08G
C11D

The present search report has been drawn up for all claims

| Place of search | Date of completion of the search | Examiner |
|---|---|---|
| The Hague | 12 January 2018 | Gault, Nathalie |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 17 18 0301

This annex lists the patent family members relating to the patent documents cited in the above-mentioned European search report. The members are as contained in the European Patent Office EDP file on
The European Patent Office is in no way liable for these particulars which are merely given for the purpose of information.

12-01-2018

| Patent document cited in search report | Publication date | Patent family member(s) | Publication date |
|---|---|---|---|
| WO 2016075178 A1 | 19-05-2016 | CN 107109306 A | 29-08-2017 |
| | | EP 3218461 A1 | 20-09-2017 |
| | | JP 2017534731 A | 24-11-2017 |
| | | US 2017321154 A1 | 09-11-2017 |
| | | WO 2016075178 A1 | 19-05-2016 |
| EP 0035478 A1 | 09-09-1981 | EP 0035478 A1 | 09-09-1981 |
| | | JP S56129299 A | 09-10-1981 |
| EP 2730597 A1 | 14-05-2014 | CN 103649153 A | 19-03-2014 |
| | | EP 2730597 A1 | 14-05-2014 |
| | | JP 5689482 B2 | 25-03-2015 |
| | | JP WO2013008593 A1 | 23-02-2015 |
| | | KR 20140021041 A | 19-02-2014 |
| | | US 2014142257 A1 | 22-05-2014 |
| | | US 2016060381 A1 | 03-03-2016 |
| | | WO 2013008593 A1 | 17-01-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4240918 E
- WO 2016075178 A1


### Non-patent literature cited in the description


- **R. STEVANOVA ; D. RANKOFF ; S. PANAYOTOVA ; S.L. SPASSOV.** *J. Am. Oil Chem. Soc.,* 1988, vol. 65, 1516-1518